# EUROPEAN PATENT SPECIFICATION

(11) **EP 2 014 449 B1**
(45) Date of publication and mention of the grant of the patent: **19.12.2012**
(21) Application number: 06725853.3
(22) Date of filing: 28.04.2006
(51) Int. Cl.: B29C 70/44, B29C 33/00, B29C 70/54, B29C 70/38

(54) **TOOL AND METHOD FOR PRODUCING WIDE PARTS OF COMPOSITE MATERIAL**
WERKZEUG UND VERFAHREN ZUR HERSTELLUNG VON BREITEN TEILEN AUS VERBUNDWERKSTOFF
OUTIL ET PROCÉDÉ DE FABRICATION DE PIÈCES DE GRANDE LONGUEUR FAITES D'UN MATÉRIAU COMPOSÉ

(43) Date of publication of application: 14.01.2009
(73) Proprietor: Airbus Operations S.L., 28906 Madrid (ES)
(72) Inventor: SANTOS GÓMEZ, José Manuel AIRBUS ESPANA S.L., 28906 Getafe, Madrid (ES); CUENCA RINCÓN, José AIRBUS ESPANA S.L., E-28906 Getafe, Madrid (ES)
(74) Representative: Elzaburu Marquez, Alberto
(86) International application number: PCT/ES2006/070052
(87) International publication number: WO 2007/125135

(56) References cited:
- WO-A1-00/44543
- WO-A2-01/76863
- GB-A- 2 268 699
- GB-A- 2 268 699
- US-A- 4 133 711
- US-A- 4 475 976
- US-A1- 2006 249 883
- CAMPBELL F C ED - CAMPBELL FLAKE C: "Manufacturing processes for advanced composites, Ply Collation: A Major Cost Driver", 1 January 2004 (2004-01-01), MANUFACTURING PROCESSES FOR ADVANCED COMPOSITES, ELSEVIER ADVANCED TECHNOLOGY, OXFORD, GB, PAGE(S) 131 - 173, XP002535222, ISBN: 978-1-85617-415-2 * paragraphs [05.6], [05.7]; figure 11 *

## Description

### FIELD OF THE INVENTION

The present invention relates to a tool and a process for manufacturing long pieces of composite material, and in particular, to a tool and a process for manufacturing pieces of composite material by means of successive operations of laying, cutting and hot-forming.

### BACKGROUND OF THE INVENTION

Laying is a process which consists of placing layers of reinforced composite material in the form of courses on a mould. An example of a composite material frequently used in the aeronautical industry is the preimpregnated one, a mixture of fibrous reinforcement and polymeric matrix used for manufacturing composite materials such that they can be stored for later use.

This may be in the form of a sheet, course, tow or fabric. In the case of thermosetting matrices the resin is generally partially cured or it is taken by means of another process to a controlled viscosity, called Step-B. Additions such as catalysts, inhibitors and flame holders can be added to obtain specific features in the final use and to improve the process, the storage and the handling features.

In this process, the courses are not placed randomly, but generally, they are placed or deposited in certain directions, specifically at 0°, 90°, 45° and -45°. The number of layers (thickness) and the arrangement of the courses in one or other directions are determined according to the nature and the magnitude of the stresses which the piece is to bear in each point.

There are two types of laying: planar and curved depending on whether the surface to be laid is planar or curved, respectively.

The laying process can be carried out manually or automatically. The machines which carry out the laying are basically of two types:
- Laying machines: lay on planar or slightly curved surfaces.
- Fiber positioning machines: lay over surfaces with a large curvature on which it is not possible to lay by using a laying machine.

The criteria determining whether a piece is laid automatically or manually are mainly two: the material used and the dimensions of the piece.

A material used, among others, for laying is the preimpregnated one. This material is sticky and its handling is not simple. Adapting the preimpregnated course manually to a straight lay contained in a plane is not complex, however, adapting said course to a curve is very complex because this material is not deformed by itself and therefore, the operator must constantly maintain the course pressed so that the latter is deformed and adapts to the desired curve, with the added difficulty of the course being sticky. Furthermore, if the number of courses to be positioned is very high, the complexity greatly increases.

The cutting process consists of a CNC gantry type mobile crane machine, which moves along a completely shrouded metallic cutting table with a plastic porous surface which allows carrying out vacuums, the cables, chains, pipes etc, being inside said table. Normally it is provided with an ultrasonic head, and a depressing group for carrying out the vacuum holding of the pieces.

This is the step in which the laminates made by means of the laying machines are cut.

Once the necessary elements (normally planar) are cut, they go through a hot-forming process. The Hot-forming process basically consists of forming a planar carbon fiber laminate, previously placed on a tool or mandrel with an appropriate geometry, and that by means of applying heat and vacuum according to a certain cycle, this laminate is adapted to the shape of the tool due to the pressure which the membrane exerts on one against the other.

It is known in the state of the art, as per document GB 2268699 A, a device for forming a fiber reinforced plastics laminate, comprising a layup table, a sheet of resiliently deformable material defining a layup surface, supported for a series of spaced jacks adjustable for height.

The present invention arises from the need to try to unify three of the steps involved in the manufacture of aeronautical pieces in order to reduce costs. Evidently, carrying out these three operations without any type of handling is quite advantageous.

### SUMMARY OF THE INVENTION

In a first aspect, the present invention provides a device for manufacturing pieces of composite material by means of laying, cutting and hot forming operations integrating the following elements:
- Two same tables, each of which comprises an outer unit and an inner unit having an outer surface with the shape of the piece to be manufactured in the device, and actuation means in a vertical direction such that it can be move upwards or downwards to form together with the external unit either tables with a planar upper surface or tables the upper surface of which may serve as a tool for forming the piece to be manufactured. These tables include in their insides means for generating a vacuum in a closed space on it. In addition, they can include means for providing heat to their upper surface.
- An automatic laying head supported by means allowing its displacement over said tables in order to carry out laying operations.
- A cutting head supported by means allowing its displacement over said tables to carry out cutting operations. This head has two positions, one of rest and the other of cutting. In that of rest it is positioned at a height superior to that of the laying head and in the lower position, at an inferior height so that this permits the cutting of that which has been laid, without the laying head interfering in this process. This head also uses a numerical control program.
- A tool including a forming membrane which is supported by means allowing its displacement in order to be placed on each table and to position the membrane on each of the tables in order to carry out the forming operation. This tool includes in it inside a means for providing heat on a surface which is placed under it.

An important feature of the device is that it has the ability to laminate, cut and form the stratified composite materials by means of heat *in situ,* without needing to carry out any handling or movements of such stratified materials between one operation and another.

Another important feature of the device is that it allows manufacturing two parallel pieces in each table. Once the cutting process on a first table is completed, the laying/cutting head will move towards the second table to start the laying operation on it. In turn, the forming tool will move to the first table to carry out the forming operation.

In a second aspect, the present invention provides a process for manufacturing a piece of composite material by means of laying, cutting and hot forming comprising the following steps:
- Laminating on a device configured with a planar surface by placing on said surface layers of fabric in pre-determined positions and numbers by means of an automatic laying head and by using a numerical-control program.
- Cutting the excess parts of the laminate on the same device by means of a cutting head or by means of a pressure operation on the outline of the laminated piece arranged on a raised surface with the appropriate means.
- Forming the piece with the desired shape in the same device by arranging a forming membrane on it, raising a unit with the shape of the piece and applying heat and vacuum.

Other features and advantages of the present invention will be disclosed in the following detailed description of an illustrative embodiment of its object in relation to the accompanying drawings.

### DESCRIPTION OF THE DRAWINGS

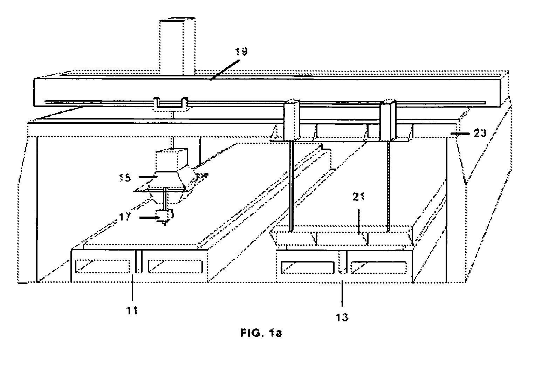

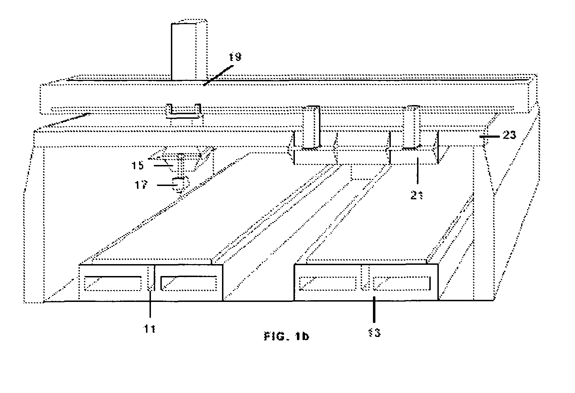

Figures 1a and 1b show perspective schematic views of the device object of the present invention showing different positions of the laying and cutting heads and of the tool with the forming membrane.

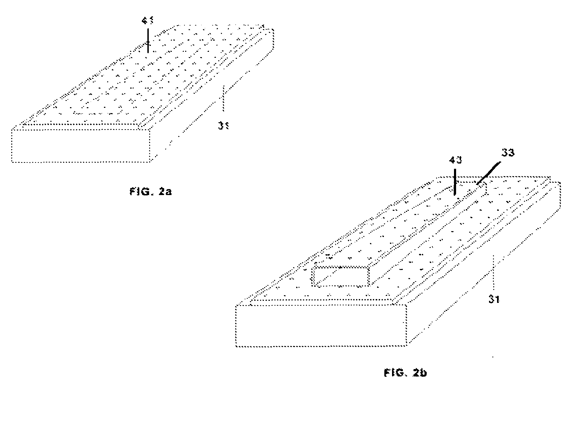

Figures 2a and 2b show schematic views of the tables of the device with their units forming an upper planar surface and an upper surface with the shape of the piece.
Figure 3a shows a schematic view of the heating means used in the forming tool and Figure 3b shows a schematic view of the membrane used in the forming tool.
Figures 4a and 4b show perspective schematic views of the pieces manufactured with the device and process of the present invention.

### DETAILED DESCRIPTION OF THE INVENTION

In the preferred embodiment illustrated in the drawings, the device object of the present invention comprises two tables 11, 13, a laying head 15 and a cutting head 17 supported by means 19 allowing its displacement over said tables 11, 13, and a tool 21 including a forming membrane 25 and means 27 for providing heat to a space provided it, which is supported by means 23 allowing its displacement in order to be placed on each of the tables 11, 13 and to position the forming membrane 25 on it.

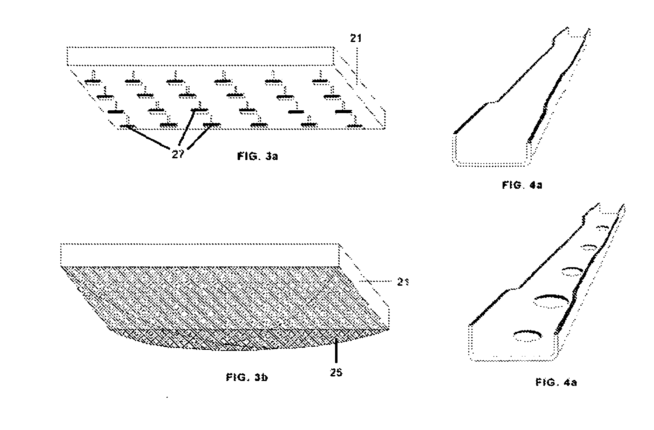

This device results particularly advantageous for manufacturing long pieces with a U-shaped section as shown in Figures 4a and 4b.

The cutting head 17 is located in the rear part of the laying head 15, being able to move downwards to a lower position at the moment when cutting is necessary.

Tables 11, 13 are the same and have a modular structure, including an outer unit 31 and an inner unit 33 in order to be initially configured with an upper planar surface 41 in order to carry out the laying and cutting operations on it by offering a surface the function of which is to support the stratified material and regenerate the vertical force which the laying head 15 produces and to allow the cutting operations to be carried out without damaging the cutting blade.

Tables 11, 13 can also be configured with an upper surface 43 with the shape of the piece to be manufactured in order to carry out the forming operation of the same.

Tables 11, 13 include means (not illustrated) for generating a vacuum in a closed space on it and, optionally, means (not illustrated) for providing heat to their upper surface.

In the event that the piece to be manufactured has curved parts on its surface (for example, radios) and/or different thicknesses, the inner unit 33 of the tables 11, 13 should also have them. In any case, the inner unit 33 copying the inner surface of the piece to be manufactured must always be totally retractable inside the table 11, 13 itself using to that effect auxiliary means, if necessary.

The device includes two tables 11, 13 such that when a forming operation is being carried out on one of these, laying and cutting operations can be carried out on the other. In this way the use of the laying head 15, cutting head 17 and of the tool 21 with the forming membrane is optimized.

The process object of the present invention will be described below.

In the first step, the laminating process on a table with a planar surface is carried out by means of an automatic laying head.

If the thickness of the laminate should require it, compacting by vacuum may be necessary, which requires that the table is airtight. To that effect, it would be necessary to cover the area to be laid, before carrying out the laying, with a film of plastic material, or of any other type, which is non-porous. In order to keep the film in place, and so that it does not move due to the loads of all types produced in the laying process, it is fastened to the surface by vacuum, the latter being transmitted through drills carried out on the table itself, and/or on the hot forming tool.

In the second step, the excess parts of the laminate are cut on the table itself by means of a cutting head. To carry out this operation, the laminate must be fastened to the table by means of vacuum. This is produced and transmitted through drills in said table, as described in the previous section. Furthermore, a film of plastic or other material is positioned on the laminated material, and covers the whole table, in order to reduce the loss of vacuum. The upper part of the table is covered with a material which allows cutting of that which has been laid without damaging the cutting blade.

In the third step, the piece is formed with the desired shape by arranging a forming membrane on it, elevating a unit with the shape of the piece and applying heat and vacuum.

In a preferred embodiment of the invention this step is carried out by means of the following steps:
- Arranging a forming membrane on the piece
- Applying an initial heating cycle until a predetermined temperature, depending on the carbon fiber material used, is reached. In this way the production of large creases in the curved areas is facilitated in the later stage.
- Applying a first vacuum cycle until a predetermined inner pressure (about 1 bar) is reached.
- Displacing a unit of the device with the shape of the piece upwards at a predetermined speed.
- Applying a second cycle of vacuum and heat until a predetermined pressure and temperature are reached, maintaining its application for the time necessary to form the piece.
- In the preferred embodiment which has just been described, those modifications that are comprised within the scope defined by the following claims can be introduced.

## Claims

1. A device for manufacturing pieces of composite material by means of laying, cutting and hot forming operations **characterized in that** it comprises:
- two same tables (11, 13), each of which comprise an outer unit(31) and an inner unit (33) having an upper surface (43) with the shape of the piece to be manufactured and the actuation in a vertical direction such that it can move upwards or downwards to form together with the outer unit (31) either the tables (11,13) with a planar upper surface (41) or tables (11,13) the upper surface of which may serve as a tool for forming the piece to be manufactured, said tables (11, 13) also comprising means for generating a vacuum in a closed space on it;
- an automatic laying head (15) supported by means (19) which allow its displacement on said tables (11,13) to carry out the laying operations;
- a cutting head (17) supported by the same means (19) allowing its displacement on said tables (11, 13) in order to carry out the cutting operations;
- a tool (21) including a forming membrane (25) and heating means (27) which is supported by means (23) allowing its displacement in order to be placed on table (11, 13) and to position the forming membrane (25) on each of them in order to carry out the forming operation.

2. A device for manufacturing pieces of composite material according to claim 1, **characterized in that** said tables (11, 13) also comprise means for providing heat to their upper surface.

3. A device for manufacturing pieces of composite material according to claims 1 or 2, **characterized in that** said units (31, 33) comprise auxiliary means for configuring tables (11,13) with a planar upper surface (41) when the upper surface (43) of the inner unit includes curved parts which prevent carrying it out with said units (31,33) alone.

4. A process for manufacturing a piece of composite material by means of laying, cutting and hot forming operations using a device according to any of claims 1-3, **characterized in that** it comprises the following steps:
a) Carrying out the first lamination on a device configured with a planar surface by means of an automatic cutting head;
b) Cutting the excess pieces of the laminate on the same device.
c) Forming the piece with the desired shape in the same device by arranging a forming membrane on it, raising a unit with the shape of the piece and applying heat and vacuum.

5. A process for manufacturing a piece of composite material according to claim 4, **characterized in that** step b) is carried out by means of a cutting head associated to the laying head.

6. A process for manufacturing a composite material according to claim 4, **characterized in that** step b) is carried out by means of a pressure operation on the outline of the laminated piece arranged on a raised surface.

7. A process for manufacturing a piece of composite material according to claim 4, **characterized in that** step c) is carried out in the following steps:
c1) Arranging a forming membrane on the laminate.
c2) Applying a first heating cycle until a predetermined temperature is reached;
c3) Applying a first vacuum cycle until a predetermined inner pressure is reached;
c4) Displacing a unit of the device with the shape of the piece upwards at a pre-determined speed;
c5) Applying a second cycle of vacuum and heat until a predetermined pressure and temperature are reached.

## Patentansprüche

1. Vorrichtung zum Herstellen von Verbundmaterialteilen durch Verlege-, Schneid- und Warmumformprozesse, **gekennzeichnet durch**:
- zwei gleiche Tische (11, 13), die jeweils eine äußere Einheit (31) und eine innere Einheit (33) aufweist, die eine Oberseite (43) in der Form des herzustellen Teils aufweist und in eine vertikale Richtung auf- und abwärts bewegbar ist, um zusammen mit der äußeren Einheit (31) entweder die Tische (11, 13) mit einer ebenen Oberseite (41) oder Tische (11, 13) zu bilden, deren Oberseite als ein Werkzeug zum Formen des herzustellenden Teils dienen kann, wobei die Tische (11, 13) außerdem eine Einrichtung zum Erzeugen eines Vakuums in einem geschlossenen Raum darauf aufweisen;
- einen automatischen Verlegekopf (15), der **durch** eine Einrichtung (19) gehalten wird, die es ermöglicht, ihn zu den Tischen (11, 13) zu bewegen, um Verlegeprozesse auszuführen;
- einen Schneidkopf (17), der **durch** die gleiche Einrichtung (19) gehalten wird, wodurch ermöglicht wird, ihn zu den Tischen (11, 13) zu bewegen, um Schneidprozesse auszuführen; und
- ein Werkzeug (21), das eine Formungsmembran (25) und eine Heizeinrichtung (27) aufweist und **durch** eine Einrichtung (23) gehalten wird, die es ermöglicht, es zu bewegen um es auf den Tischen (11, 13) zu platzieren und die Formungsmempbran (25) auf jedem dieser zu positionieren, um den Formungsprozess auszuführen.

2. Vorrichtung nach Anspruch 1, **dadurch gekennzeichnet, dass** die Tische (11, 13) ferner eine Einrichtung zum Zuführen von Wärme zu ihrer Oberseite aufweisen.

3. Vorrichtung nach Anspruch 1 oder 2, **dadurch gekennzeichnet, dass** die Einheiten (31, 33) eine Zusatzeinrichtung zum Konfigurieren der Tische (11, 13) mit einer ebenen Oberseite (41) aufweisen, wenn die Oberseite (43) der inneren Einheit gekrümmte Abschnitte aufweist, die die Ausführung unter Verwendung ausschließlich der Einheiten (31, 33) verhindern.

4. Verfahren zum Herstellen von Verbundmaterialteilen durch Verlege-, Schneid- und Warmumformprozesse unter Verwendung einer Vorrichtung nach einem der Ansprüche 1 bis 3, **dadurch gekennzeichnet, dass** das Verfahren die folgenden Schritte aufweist:
a) Ausführen eines ersten Laminierungsschritts auf einer Vorrichtung, die mit einer ebenen Oberseite konfiguriert ist, durch einen automatischen Verlegekopf;
b) Abschneiden überflüssiger Stücke des Laminats in der gleichen Vorrichtung; und
c) Ausbilden des Teils in der gewünschten Form in der gleichen Vorrichtung durch Anordnen einer Formungsmembran darauf, Anheben einer Einheit mit der Form des Teils und Zuführen von Wärme und Erzeugen von Vakuum.

5. Verfahren nach Anspruch 4, **dadurch gekennzeichnet, dass** Schritt b) durch einen dem Verlegekopf zugeordneten Schneidkopf ausgeführt wird.

6. Verfahren nach Anspruch 4, **dadurch gekennzeichnet, dass** Schritt b) durch einen Druckvorgang auf die Außenkontur des auf einer erhöhten Fläche angeordneten laminierten Teils ausgeführt wird.

7. Verfahren nach Anspruch 4, **dadurch gekennzeichnet, dass** in Schritt c) die folgenden Schritte ausgeführt werden:
c1) Anordnen einer Formungsmembran auf dem Laminat;
c2) Anwenden eines ersten Heizzyklus, bis eine vorgegebene Temperatur erreicht ist;
c3) Anwenden eines ersten Vakuumzyklus, bis ein vorgegebener Innendruck erreicht ist;
c4) Bewegen einer Einheit der Vorrichtung mit der Form des Teils mit einer vorgegebenen Geschwindigkeit nach oben; und
c5) Anwenden eines zweiten Vakuum- und Heizzyklus, bis ein vorgegebener Druck und eine vorgegebene Temperatur erreicht sind.

## Revendications

1. Dispositif pour la fabrication de pièces faites d'un matériau composé, au moyen d'opérations de pose, de coupe et de formage à chaud, **caractérisé en ce qu'**il comprend :
deux tables identiques (11, 13), dont chacune comprend une unité externe (31) et une unité interne (33) ayant une surface supérieure (43) avec la forme de la pièce à fabriquer, et l'actionnement dans une direction verticale de sorte qu'elle peut être déplacée vers le haut ou vers le bas pour former conjointement avec l'unité externe (31), les tables (11, 13) avec une surface supérieure plane (41) ou les tables (11, 13) dont la surface supérieure sert d'outil pour former la pièce à fabriquer, lesdites tables (11, 13) comprenant également des moyens pour générer un vide dans un espace clos sur ces dernières ;
une tête de pose automatique (15) supportée par des moyens (19) qui permettent son déplacement sur lesdites tables (11, 13) pour réaliser les opérations de pose ;
une tête de coupe (17) supportée par les mêmes moyens (19) permettant son déplacement sur lesdites tables (11, 13) afin de réaliser les opérations de coupe ;
un outil (21) comprenant une membrane de formage (25) et des moyens de chauffage (27) qui sont supportés par des moyens (23) permettant son déplacement, afin d'être placé sur la table (11, 13) et de positionner la membrane de formage (25) sur chacune d'entre elles afin de réaliser l'opération de formage.

2. Dispositif pour la fabrication de pièces faites d'un matériau composé selon la revendication 1, **caractérisé en ce que** lesdites tables (11, 13) comprennent également des moyens pour fournir de la chaleur à leur surface supérieure.

3. Dispositif pour la fabrication de pièces faites d'un matériau composé selon les revendications 1 ou 2, **caractérisé en ce que** lesdites unités (31, 33) comprennent des moyens auxiliaires pour configurer des tables (11, 13) avec une surface supérieure plane (41) lorsque la surface supérieure (43) de l'unité interne comprend des parties incurvées qui empêchent sa réalisation seulement avec lesdites unités (31, 33).

4. Procédé pour fabriquer une pièce faite d'un matériau composé au moyen d'opérations de pose, de coupe et de formage à chaud, en utilisant un dispositif selon l'une quelconque des revendications 1 à 3, **caractérisé en ce qu'**il comprend les étapes suivantes consistant à :
a) réaliser la première stratification sur un dispositif configuré avec une surface plane au moyen d'une tête de coupe automatique ;
b) couper les pièces en excès du stratifié sur le même dispositif ;
c) former la pièce avec la forme souhaitée dans le même dispositif en agençant une membrane de formage sur ce dernier, lever une unité avec la forme de la pièce et appliquer de la chaleur et du vide.

5. Procédé pour fabriquer une pièce faite d'un matériau composé selon la revendication 4, **caractérisé en ce que** l'étape b) est réalisée au moyen d'une tête de coupe associée à la tête de pose.

6. Procédé pour fabriquer un matériau composé selon la revendication 4, **caractérisé en ce que** l'étape b) est réalisée au moyen d'une opération de pression sur le contour de la pièce stratifiée agencée sur une surface relevée.

7. Procédé pour fabriquer une pièce faite d'un matériau composé selon la revendication 4, **caractérisé en ce que** l'étape c) est réalisée lors des étapes suivantes consistant à :
c1) agencer une membrane de formage sur le stratifié ;
c2) appliquer un premier cycle de chauffage jusqu'à ce qu'une température prédéterminée soit atteinte ;
c3) appliquer un premier cycle de vide jusqu'à ce qu'une pression interne prédéterminée soit atteinte ;
c4) déplacer une unité du dispositif avec la forme de la pièce vers le haut à une vitesse prédéterminée ;
c5) appliquer un second cycle de vide et de chaleur jusqu'à ce qu'une pression et une température prédéterminées soient atteintes.
